# EUROPEAN PATENT APPLICATION

(11) **EP 4 844 915 A1**
(43) Date of publication of application: **25.11.2026**
(21) Application number: 26165925.4
(22) Date of filing: 19.03.2026
(51) Int. Cl.: H01M 50/213, H01M 50/247, H01M 50/262

(54) **BATTERY PACK FOR A POWER TOOL**

(30) Priority: 21.05.2025 CN 202510655284
(71) Applicant: Nanjing Chervon Industry Co., Ltd., Nanjing, Jiangsu 211106 (CN)
(72) Inventor: Hao, Jingdong, Nanjing (CN); YANG, Bin, Nanjing (CN); FU, Xiangqing, Nanjing (CN)
(74) Representative: Sun, Yiming

(57) **Abstract**

A battery pack for a power tool includes: a housing, and a cell module disposed in the housing. The cell module includes a single-layer arranged cell group including a plurality of cells arranged axially side by side in an arrangement plane, and an additional cell (230) including one cell. At least a portion of the additional cell is disposed on an upper side of the single-layer arranged cell group, and a projection of the additional cell on the arrangement plane falls within a projection range of the single-layer arranged cell group on the arrangement plane.

## Description

### TECHNICAL FIELD

The present application relates to a battery pack and, in particular, to a battery pack for a power tool.

### BACKGROUND

A battery pack in the related art includes a housing and multiple cells disposed within the housing, and the multiple cells are typically arranged side by side along the length direction of the battery pack. As the number of cells increases, the length of the battery pack increases correspondingly. Even with the staggered arrangement, the battery pack is still longer and occupies larger space.

This part provides background information related to the present application, and the background information is not necessarily the existing art.

### SUMMARY

An object of the present application is to solve or at least alleviate part or all of the preceding problems. Therefore, an object of the present application is to provide a battery pack for a power tool.

To achieve the preceding object, the present application adopts the technical solutions below.

A battery pack for a power tool includes: a housing; and a cell module disposed in the housing. The cell module includes: a single-layer arranged cell group including a plurality of cells arranged axially side by side in an arrangement plane; and an additional cell including one cell. At least a portion of the additional cell is disposed on an upper side of the single-layer arranged cell group. A projection of the additional cell on the arrangement plane falls within a projection range of the single-layer arranged cell group on the arrangement plane.

In an example, the plurality of cells in the single-layer arranged cell group are connected in series, and the single-layer arranged cell group is connected in series with the additional cell.

In an example, the plurality of cells in the single-layer arranged cell group are consistent with the additional cell in terms of battery characteristics or battery models.

In an example, the single-layer arranged cell group includes at least one layer of cells arranged in a layer.

In an example, the battery pack further includes: a locking mechanism that physically locks the battery pack to the power tool; and an unlocking mechanism including an operating member operable by a user and a linkage member connected to the operating member. The linkage member is capable of driving the locking mechanism to disengage from the power tool when the operating member is operated.

In an example, the additional cell is located below the unlocking mechanism; and/or the linkage member is at least partially disposed around a circumference of the additional cell.

In an example, a projection of the additional cell on a first plane perpendicular to a length direction of the battery pack at least partially overlaps a projection of the locking mechanism on the first plane; and/or a projection of the additional cell on a first plane perpendicular to a length direction of the battery pack at least partially overlaps a projection of the unlocking mechanism on the first plane.

In an example, the locking mechanism includes a movable locking member and a biasing element, wherein under an action of the biasing element, the locking member is capable of being embedded in a locking groove on the power tool to form an anti-disengagement lock; and the linkage member is capable of converting a linear or rotary input of the operating member into reverse displacement of the locking member, forcing the locking member to disengage from the locking groove.

In an example, the linkage member includes driving teeth that are capable of engaging with driven teeth on a locking member to drive the locking member to perform reverse displacement and disengage from a locking groove.

In an example, the linkage member includes: a fixed pin fixedly disposed; and a flexible belt. One end of the flexible belt is fixed to the locking member, and another end of the flexible belt passes around the fixed pin and is fixed to the operating member; and when the operating member is moved by an external force, tension is transmitted through the flexible belt to drive the locking member to perform the reverse displacement and disengage from the locking groove.

In an example, the plurality of cells are full-tab cells.

In an example, the plurality of cells are connected in series.

In an example, a diameter D of a cell of the plurality of cells is less than or equal to 30 mm.

In an example, a number N of the plurality of cells is greater than or equal to 5.

In an example, a length L of the battery pack in a length direction of the battery pack perpendicular to an axial direction of the plurality of cells is less than or equal to N*D+(N-1)k1+2*k2, wherein k1 denotes a constant representing a cell gap and k1 is greater than 0; and k2 denotes a constant representing a housing thickness and k2 is greater than 1 mm.

A battery pack for a power tool includes: a housing; and a cell module including multiple cells arranged axially side by side within the housing; where the diameter D of a cell of the multiple cells is less than or equal to 30 mm, the number N of the multiple cells is greater than or equal to 5, and the length L of the battery pack in a length direction of the battery pack perpendicular to an axial direction of the multiple cells is less than or equal to N*D+(N-1)k1+2*k2, where k1 denotes a constant representing the cell gap and k1 is greater than 0; and k2 denotes a constant representing the housing thickness and k2 is greater than 1 mm.

In some examples, the multiple cells are configured to be full-tab cells.

In some examples, the multiple cells are connected in series.

In some examples, the cell module includes: a single-layer arranged cell group including multiple cells arranged axially side by side in an arrangement plane; and an additional cell including one cell, where the additional cell is disposed on an upper side of the single-layer arranged cell group.

In some examples, the projection of the additional cell on the arrangement plane falls within the projection range of the single-layer arranged cell group on the arrangement plane.

In some examples, the battery pack further includes: a locking mechanism configured to physically lock the battery pack to the power tool; and an unlocking mechanism including an operating member operable by a user and a linkage member connected to the operating member, where the linkage member is capable of driving the locking mechanism to disengage from the power tool when the operating member is operated. The linkage member is at least partially disposed around the circumference of the cell.

A battery pack for a power tool includes: a housing; and a cell module disposed in the housing. The cell module includes: a single-layer arranged cell group including multiple cells arranged axially side by side in an arrangement plane; and an additional cell including one cell, where the additional cell is disposed on an upper side of the single-layer arranged cell group. The projection of the additional cell on the arrangement plane falls within the projection range of the single-layer arranged cell group on the arrangement plane.

In some examples, the multiple cells in the single-layer arranged cell group are connected in series, and the single-layer arranged cell group is connected in series with the additional cell.

In some examples, the multiple cells in the single-layer arranged cell group are consistent with the additional cell in terms of battery characteristics or battery models.

In some examples, the battery pack further includes: a locking mechanism configured to physically lock the battery pack to the power tool; and an unlocking mechanism including an operating member operable by a user and a linkage member connected to the operating member, where the linkage member is capable of driving the locking mechanism to disengage from the power tool when the operating member is operated.

In some examples, the additional cell is located below the unlocking structure; and/or the linkage member is at least partially disposed around the circumference of the additional cell.

In some examples, the single-layer arranged cell group includes at least one layer of cells arranged in a layer.

In some examples, the projection of the additional cell on a first plane perpendicular to a length direction of the battery pack at least partially overlaps the projection of the locking mechanism on the first plane; and/or the projection of the additional cell on a first plane perpendicular to a length direction of the battery pack at least partially overlaps the projection of the unlocking mechanism on the first plane.

In some examples, the diameter D of a cell of the multiple cells is less than or equal to 30 mm.

In some examples, the number N of the multiple cells is greater than or equal to 5.

In some examples, the length L of the battery pack in a length direction of the battery pack perpendicular to an axial direction of the multiple cells is less than or equal to N*D+(N-1)k1+2*k2, where k1 denotes a constant representing the cell gap and k1 is greater than 0; and k2 denotes a constant representing the housing thickness and k2 is greater than 1 mm.

A battery pack for a power tool includes: a housing; a cell module including multiple cells arranged axially side by side within the housing; a locking mechanism configured to physically lock the battery pack to the power tool; a battery connection terminal electrically coupled to the electrodes of the cells to enable bidirectional power transmission between the cells and the power tool; and an unlocking mechanism including an operating member operable by the user and a linkage member connected to the operating member, where the linkage member can drive the locking mechanism to disengage from the power tool when the operating member is operated. The linkage member is at least partially disposed around the circumference of the cell.

In some examples, the multiple cells are configured to be full-tab cells.

In some examples, the cell module includes: a single-layer arranged cell group including multiple cells arranged axially side by side in an arrangement plane; and an additional cell including one cell, where the additional cell is disposed on an upper side of the single-layer arranged cell group.

In some examples, the linkage member is at least partially disposed around the circumference of the additional cell.

In some examples, the projection of the additional cell on the arrangement plane falls within the projection range of the single-layer arranged cell group on the arrangement plane.

In some examples, the locking mechanism includes a movable locking member and a biasing element. Under the action of the biasing element, the locking member can be embedded in a locking groove on the power tool to form an anti-disengagement lock. The linkage member can convert the linear or rotary input of the operating member into the reverse displacement of the locking member, forcing the locking member to disengage from the locking groove.

In some examples, the linkage member includes driving teeth that can engage with driven teeth on the locking member to drive the locking member to perform reverse displacement and disengage from the locking groove.

In some examples, the linkage member includes: a fixed pin fixedly disposed; and a flexible belt, where one end of the flexible belt is fixed to the locking member, and the other end of the flexible belt passes around the fixed pin and is fixed to the operating member; and when the operating member is moved by an external force, the tension is transmitted through the flexible belt to drive the locking member to perform reverse displacement and disengage from the locking groove.

### BRIEF DESCRIPTION OF DRAWINGS

FIG. 1 is a first schematic view of a locking mechanism of a battery pack in a locked state according to the present application.
FIG. 2 is a second schematic view of a locking mechanism of a battery pack in a locked state according to the present application.
FIG. 3 is a front view of a locking mechanism of a battery pack in a locked state according to the present application.
FIG. 4 is a top view of a locking mechanism of a battery pack in a locked state according to the present application.
FIG. 5 is a sectional view of FIG. 4 taken along A-A.
FIG. 6 is a partial structural view of FIG. 5.
FIG. 7 is a first schematic view of a locking mechanism of a battery pack in an unlocked state according to the present application.
FIG. 8 is a second schematic view of a locking mechanism of a battery pack in an unlocked state according to the present application.
FIG. 9 is a front view of a locking mechanism of a battery pack in an unlocked state according to the present application.
FIG. 10 is a top view of a locking mechanism of a battery pack in an unlocked state according to the present application.
FIG. 11 is a sectional view of FIG. 10 taken along B-B.
FIG. 12 is a partial structural view of FIG. 11.
FIG. 13 is a first schematic view of a locking mechanism of another battery pack in a locked state according to the present application.
FIG. 14 is a second schematic view of a locking mechanism of another battery pack in a locked state according to the present application.
FIG. 15 is a front view of a locking mechanism of another battery pack in a locked state according to the present application.
FIG. 16 is a top view of a locking mechanism of another battery pack in a locked state according to the present application.
FIG. 17 is a sectional view of FIG. 16 taken along C-C.
FIG. 18 is a partial structural view of FIG. 17.
FIG. 19 is a first schematic view of a locking mechanism of another battery pack in an unlocked state according to the present application.
FIG. 20 is a second schematic view of a locking mechanism of another battery pack in an unlocked state according to the present application.
FIG. 21 is a front view of a locking mechanism of another battery pack in an unlocked state according to the present application.
FIG. 22 is a top view of a locking mechanism of another battery pack in an unlocked state according to the present application.
FIG. 23 is a sectional view of FIG. 22 taken along D-D.
FIG. 24 is a partial structural view of FIG. 23.
FIG. 25 is a first schematic view of a locking mechanism of another battery pack in a locked state according to the present application.
FIG. 26 is a second schematic view of a locking mechanism of another battery pack in a locked state according to the present application.
FIG. 27 is a front view of a locking mechanism of another battery pack in a locked state according to the present application.
FIG. 28 is a top view of a locking mechanism of another battery pack in a locked state according to the present application.
FIG. 29 is a sectional view of FIG. 28 taken along E-E.
FIG. 30 is a partial structural view of FIG. 29.
FIG. 31 is a first schematic view of a locking mechanism of another battery pack in an unlocked state according to the present application.
FIG. 32 is a second schematic view of a locking mechanism of another battery pack in an unlocked state according to the present application.
FIG. 33 is a front view of a locking mechanism of another battery pack in an unlocked state according to the present application.
FIG. 34 is a top view of a locking mechanism of another battery pack in an unlocked state according to the present application.
FIG. 35 is a sectional view of FIG. 34 taken along F-F.
FIG. 36 is a partial structural view of FIG. 35.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, a lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

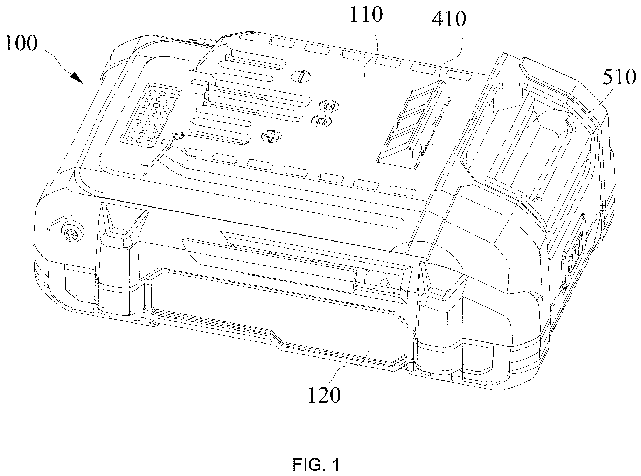

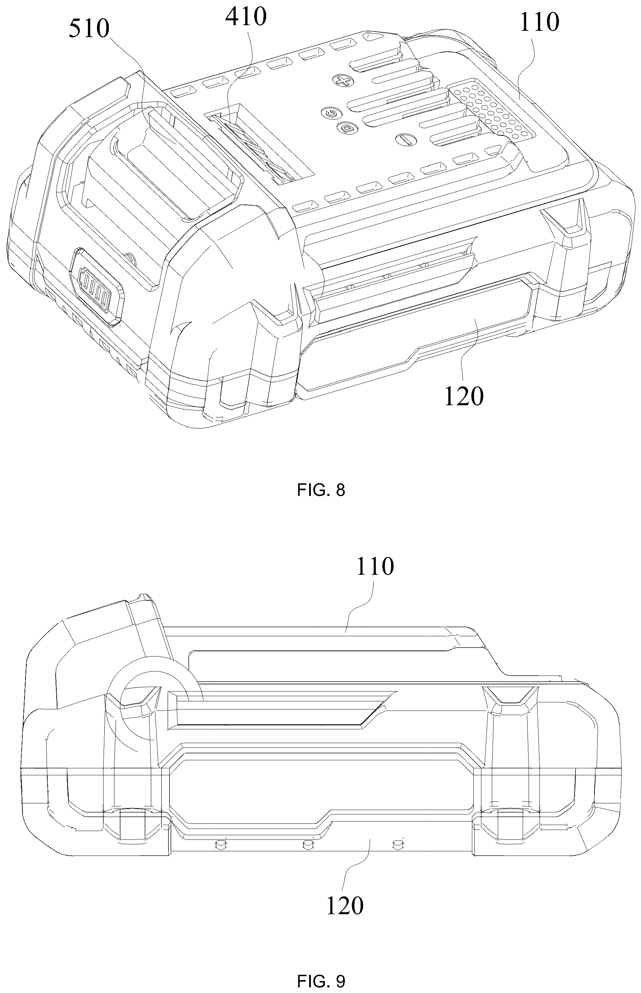

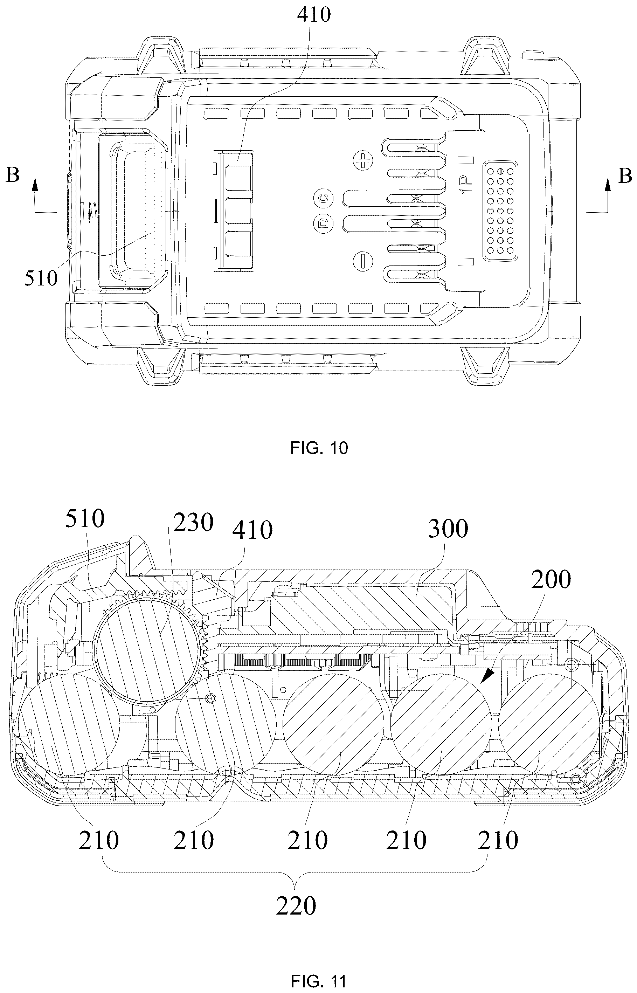

Referring to FIGS. 1 to 12, this example provides a battery pack for a power tool. The battery pack can supply electrical energy to the power tool. The power tool may be a handheld power tool, such as an angle grinder, a polisher, a cutter, a grooving machine, an electric router, or a sawing tool. The power tool may also be a self-propelled power tool, such as a mower or a snow thrower. It is to be understood by those skilled in the art that the battery pack can be used in other electrical devices.

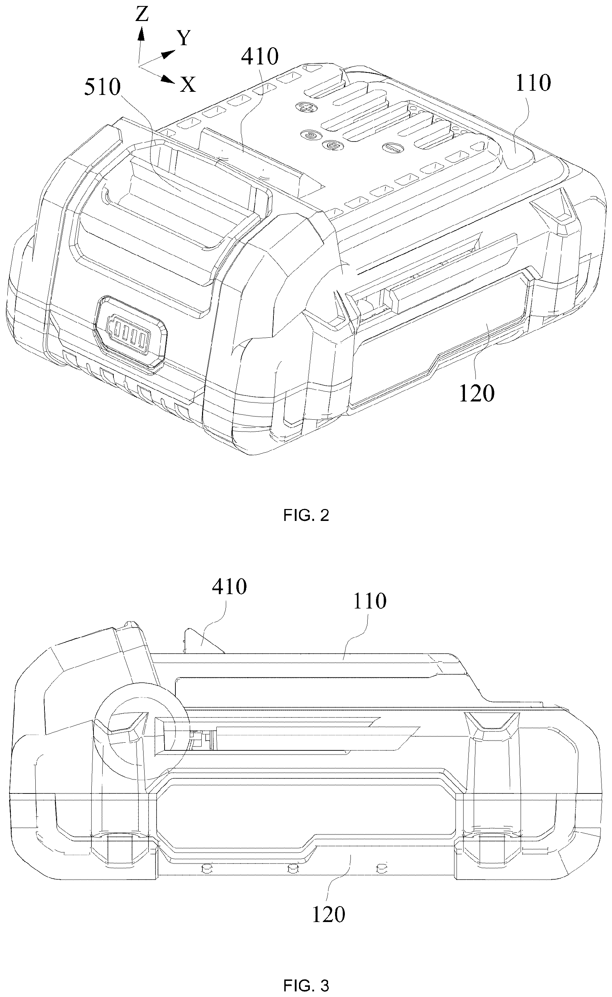

The battery pack includes a housing 100 and a cell module 200. The cell module 200 includes multiple cells 210 arranged axially side by side within the housing 100, that is, the multiple cells 210 are arranged side by side along the length direction of the cells. For example, the housing 100 is basically in the shape of a rectangular parallelepiped. In FIG. 2, the X direction represents the width direction of the battery pack, which is also the axial direction of the cells 210, the Y direction represents the length direction of the battery pack, and the Z direction represents the height direction of the battery pack.

The housing 100 has a detachable and split structure, which facilitates the installation of the cells 210, a control board assembly 300, and the like inside the housing 100. For example, the housing 100 includes an upper housing 110 and a lower housing 120 assembled at an interface to form an inner cavity for accommodating the multiple cells 210 and the control board assembly 300. The housing 100 is made of a first material. Specifically, the first material is a thermoplastic material such as polyethylene plastic or polyvinyl chloride plastic.

For example, the cells 210 are cylindrical cells, and the multiple cells 210 are connected in series, in parallel, or in a series-parallel combination. The series-parallel combination includes some cells 210 connected in series and some cells 210 connected in parallel. In some examples, the rated voltage of the cell 210 is basically 4.2 V. In some examples, the cell 210 is configured to be a full-tab battery or a continuous tab battery. The full tab configuration means that the current collector (such as an aluminum foil or a copper foil) of the electrode (the positive electrode or the negative electrode) of the cell 210 adopts a full-coverage tab design, that is, the entire edge of the current collector is directly used as a path for current conduction, rather than a conventional spot-welded tab configuration with a small number of tabs. By increasing the contact area of the tabs, the current transmission distance is reduced, thereby reducing internal resistance and heat generation.

In a conventional battery pack, multiple cells 210 are arranged in a row, resulting in a relatively long battery pack. In the battery pack provided in this example, the cell module 200 includes a single-layer arranged cell group 220 and an additional cell 230. The single-layer arranged cell group 220 includes multiple cells 210 arranged axially side by side in an arrangement plane. In some examples, the single-layer arranged cell group 220 may be understood as including at least one layer of cells 210 arranged side by side. The additional cell 230 includes one cell 210, meaning that the additional cell 230 is one cell 210. The additional cell 230 is disposed on the upper side of the single-layer arranged cell group 220. Through the arrangement manner of the single-layer arranged cell group 220 and the additional cell 230, space in the length direction of the battery pack can be saved, thereby shortening the length of the battery pack.

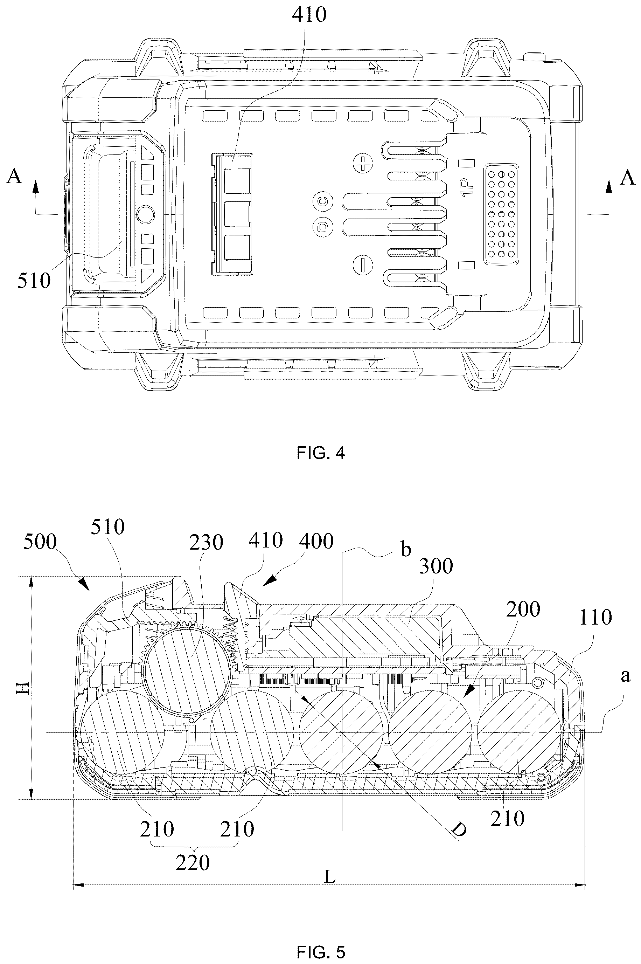

In FIG. 5, the arrangement plane is indicated by a. As shown in FIG. 5, the number N of cells 210 is equal to 6. The single-layer arranged cell group 220 includes five cells 210 arranged axially side by side in the arrangement plane. The additional cell 230 includes one cell 210 and is disposed on the upper side of the single-layer arranged cell group 220.

The projection of the additional cell 230 on the arrangement plane falls within the range of the projection range of the single-layer arranged cell group 220 on the arrangement plane. The projection range refers to a continuous region covered by the projection of the entirety of the single-layer arranged cell group 220 on the arrangement plane, which is delimited by a left edge of a leftmost cell and a right edge of a rightmost cell in the cell group 220, and includes the gaps between the cells 220. In this manner, space in the length direction of the battery pack can be saved, thereby shortening the length of the battery pack. In some examples, the bottom end of the additional cell 230 is not lower than the top end of the single-layer arranged cell group 220, and the additional cell 230 may be located above one of the cells 210 in the single-layer arranged cell group 220. In some examples, the bottom end of the additional cell 230 is lower than the top end of the single-layer cell group 220, and the additional cell 230 may be at least partially inserted between adjacent cells 210 in the single-layer arranged cell group 220, thereby reducing the height of the battery pack.

As shown in FIG. 5, the diameter D of the cell 210 is less than or equal to 30 mm, the number N of cells 210 is greater than or equal to 5, and the length L of the battery pack in the length direction of the battery pack perpendicular to the axial direction of the cells 210 is less than or equal to N*D+(N-1)k1+2*k2. k1 denotes a constant representing the cell gap and k1 is greater than 0. For example, k1 may be 0.5 mm, 1 mm, 1.5 mm, 2 mm, 2.5 mm, 3 mm, or the like. k2 denotes a constant representing the housing thickness and k2 is greater than 1 mm. For example, k2 may be 1.5 mm, 2 mm, 2.5 mm, or 3 mm. In this example, k1 represents an average gap, which refers to an average value of the gaps between every two adjacent cells 210 in the length direction of the battery pack. k2 represents an average housing thickness, which refers to an average value of the thicknesses of the two housing walls in the length direction of the battery pack.

In an example, the plurality of cells 210 in the single-layer arranged cell group 220 are arranged in parallel, and the additional cell 230 includes only a single cell, which is arranged in parallel with the plurality of cells 210. The single cell is asymmetrical relative to the single-layer arranged cell group 220. The single cell is disposed at one end of the single-layer arranged cell group 220.

In an example, L≤(N-1)*(D+k1)+2*k2. For example, if the number N of cells 210 is equal to 5, the cell gap k1 is equal to 2 mm, and the housing thickness k2 is equal to 5 mm, then the length L of the battery pack is less than or equal to 4*(21+2)+5*2=102 mm. In a conventional battery pack, if five cells 210 are arranged in a row, the length of the battery pack is equal to 5*21+4*2+2*5=123 mm.

For example, if the number N of cells 210 is equal to 6, the cell gap k1 is equal to 2 mm, and the housing thickness k2 is equal to 5 mm, then the length L of the battery pack is less than or equal to 5*(21+2)+5*2=125 mm. In a conventional battery pack, if five cells 210 are arranged in a row, the length of the battery pack is equal to 6*21+5*2+2*5=146 mm.

As shown in FIG. 5, in the height direction perpendicular to the length direction, the height H of the battery pack is less than or equal to D+k2+k3, where k3 denotes a constant representing the control board assembly thickness.

For example, if the number N of cells 210 is equal to 5, the housing thickness k2 is equal to 5 mm, and the control board assembly thickness k3 is 10 mm, then the height H of the battery pack is less than or equal to 21+5+10=36 mm.

In some examples, the multiple cells 210 in the single-layer arranged cell group 220 are connected in series, and the single-layer arranged cell group 220 is connected in series with the additional cell 230. That is, all the cells 210 are connected in series. The series-connected cells 210 should be as consistent as possible in terms of the capacity, internal resistance, and charge/discharge performance.

In some examples, the multiple cells 210 in the single-layer arranged cell group 220 are consistent with the additional cell 230 in terms of battery characteristics or battery models. The battery characteristics of the cells 210 mainly include electrical characteristics, thermal characteristics, cycle life, and safety characteristics. The battery models of the cells 210 typically include size specifications, chemical systems, and capacities. For example, a 21700 cell has a diameter of 21 mm and a height of 70 mm.

The battery pack further includes a battery connection terminal electrically coupled to the electrodes of the cells 210 to enable bidirectional power transmission between the cells 210 and the power tool. The battery connection terminal is a key component for the electrical and mechanical connection between the cells 210 and the external circuit. The battery connection terminal includes a battery positive terminal and a battery negative terminal. Specifically, the electrical energy of the cells 210 flows through the positive terminals of the cells and the positive terminal of the battery pack to the power tool, and then returns to the cells 210 through the negative terminal of the battery pack and the negative terminals of the cells.

The battery pack further includes a locking mechanism 400 and an unlocking mechanism 500. The locking mechanism 400 is configured to physically lock the battery pack to the power tool. The unlocking mechanism 500 includes an operating member 510 operable by the user and a linkage member 520 connected to the operating member 510. The linkage member 520 can drive the locking mechanism 400 to disengage from the power tool when the operating member 510 is operated. When the battery pack needs to be removed, the operating member 510 is operated to drive the linkage member 520 to move so that the linkage member 520 can drive the locking mechanism 400 to disengage from the power tool.

The locking mechanism 400 has a locked state and an unlocked state. When the locking mechanism 400 physically locks the battery pack to the power tool, the locking mechanism 400 is in the locked state. When the operating member 510 is operated, the linkage member 520 drives the locking mechanism 400 to switch to the unlocked state so that the locking mechanism 400 can disengage from the power tool.

In some examples, the additional cell 230 is located below the unlocking structure, making full use of space and ensuring a compact structure, thereby resulting in a smaller battery pack in terms of the length and height. In some examples, the additional cell 230 is located below the locking mechanism 400 and the unlocking structure. In some examples, the additional cell 230 is located between the locking mechanism 400 and the unlocking structure.

In some examples, the linkage member 520 is at least partially disposed around the circumference of the cell 210, making full use of the support provided by the cell 210 and saving space. For example, the linkage member 520 is at least partially disposed around the circumference of the additional cell 230, making full use of the space surrounding the additional cell 230. The additional cell 230 is disposed on the upper side of the single-layer arranged cell group 220, and the linkage member 520 is wound around the circumference of the additional cell 230, making full use of space and ensuring a compact structure.

In some examples, the operating member 510 is at least partially disposed around the circumference of the cell 210, making full use of the support provided by the cell 210 and saving space. For example, the operating member 510 is at least partially disposed around the circumference of the additional cell 230, making full use of the space surrounding the additional cell 230.

In some examples, the projection of the additional cell 230 on a first plane perpendicular to the length direction of the battery pack at least partially overlaps the projection of the locking mechanism 400 on the first plane, making full use of space and ensuring a compact structure. In some examples, the projection of the additional cell 230 on a first plane perpendicular to the length direction of the battery pack at least partially overlaps the projection of the locking mechanism 500 on the first plane, making full use of space and ensuring a compact structure. In FIG. 5, the first plane is indicated by b.

The locking mechanism 400 includes a movable locking member 410 and a biasing element 420. Under the action of the biasing element 420, the locking member 410 can be embedded in a locking groove on the power tool to form an anti-disengagement lock. The linkage member 520 can convert the linear or rotary input of the operating member 510 into the reverse displacement of the locking member 410, forcing the locking member 410 to disengage from the locking groove. When the locking mechanism 400 is in the locked state, the locking member 410 is inserted into the locking groove under the action of the biasing element 420. When the operating member 510 is operated, the operating member 510 moves linearly or rotates, and the linkage member 520 drives the locking member 410 to perform reverse displacement, forcing the locking member 410 to disengage from the locking groove. In this manner, the locking mechanism 400 can disengage from the power tool.

For example, an accommodation groove 130 is disposed on the top of the housing 100 of the battery pack, the locking member 410 is slidably connected to the accommodation groove 130, and the biasing element 420 is disposed between the locking member 410 and the accommodation groove 130. When the locking mechanism 400 is in the locked state, the locking member 410 protrudes from the top of the accommodation groove 130, and the biasing element 420 applies an abutting force to the locking member 410 so that the locking member 410 can remain in the current state. When the operating member 510 is operated, the operating member 510 moves linearly or rotates, and the linkage member 520 drives the locking member 410 to perform reverse displacement, thereby overcoming the elastic force of the biasing element 420 to force the locking member 410 to disengage from the locking groove. In this manner, the locking mechanism 400 switches to the unlocked state. In this case, the locking member 410 retracts into the accommodation groove 130.

In some examples, the linkage member 520 includes driving teeth 521 that can engage with driven teeth 411 on the locking member 410 to drive the locking member 410 to perform reverse displacement and disengage from the locking groove. The structure is simple, is easy to implement, occupies little space, and has a long service life by engaging the driving teeth 521 with the driven teeth 411.

In an example, as shown in FIGS. 1 to 12, the locking member 410 is provided with multiple driven teeth 411 spaced apart along the height direction, the linkage member 520 is at least partially disposed in an arc shape around the additional cell 230, the linkage member 520 is provided with multiple driving teeth 521 spaced apart along the circumferential direction, and the driving teeth 521 engage with the driven teeth 411.

The operating member 510 moves linearly to drive the linkage member 520 to rotate. Specifically, the operating member 510 is provided with multiple drive teeth 511 spaced apart along the length direction of the battery pack, the drive teeth 511 engage with the driving teeth 521, and the operating member 510 can move along the length direction of the battery pack to drive the linkage member 520 to rotate.

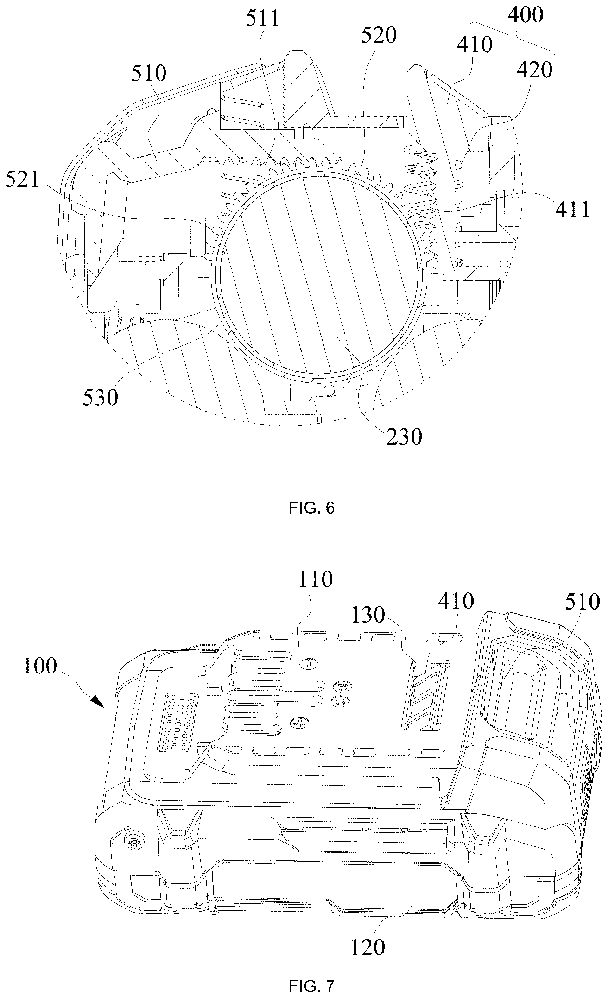

An elastic member is disposed between the operating member 510 and the housing 100 to facilitate the resetting of the operating member 510. As shown in FIGS. 1 to 6, the locking mechanism 400 is in the locked state, the operating member 510 is at a locked position, and the locking member 410 protrudes from the top of the accommodation groove 130. When unlocking is required, the operating member 510 is pushed along the length direction of the battery pack toward the position adjacent to the locking member 410. As shown in FIGS. 7 to 12, the locking mechanism 400 is in the unlocked state, the operating member 510 is at an unlocked position, and the locking member 410 retracts into the accommodation groove 130.

The linkage member 520 may be directly connected to the additional cell 230 or indirectly connected to the additional cell 230. For example, the unlocking mechanism 500 includes a fixed ring 530 fixedly sleeved on the outer side of the additional cell 230, and the linkage member 520 is rotatably sleeved on the outer side of the fixed ring 530.

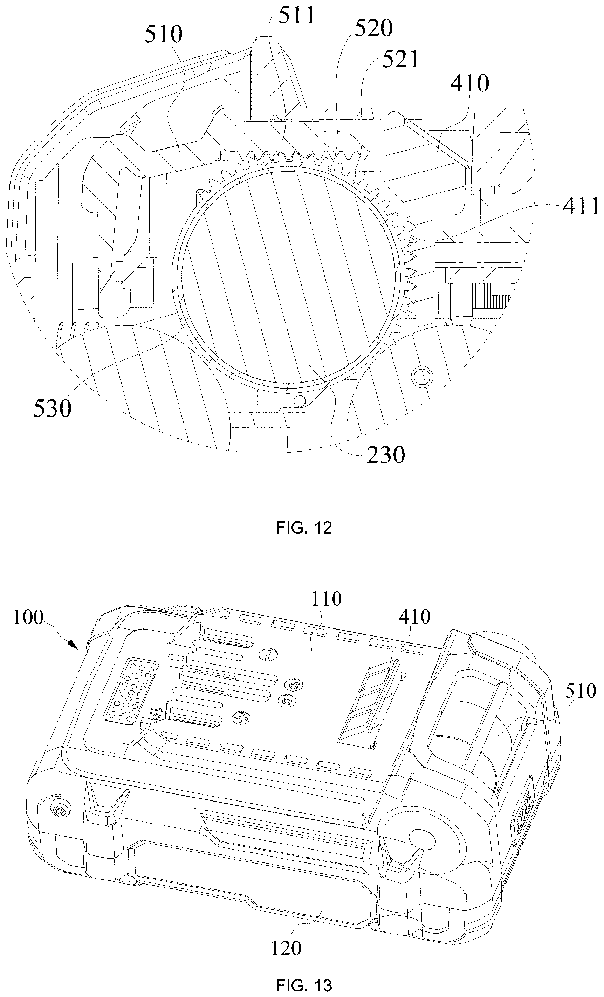

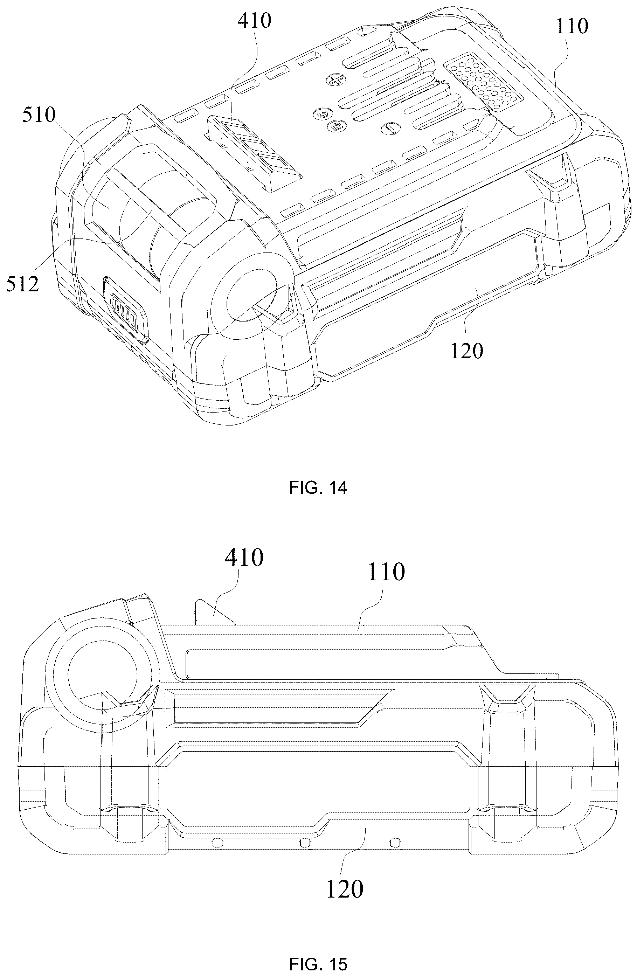

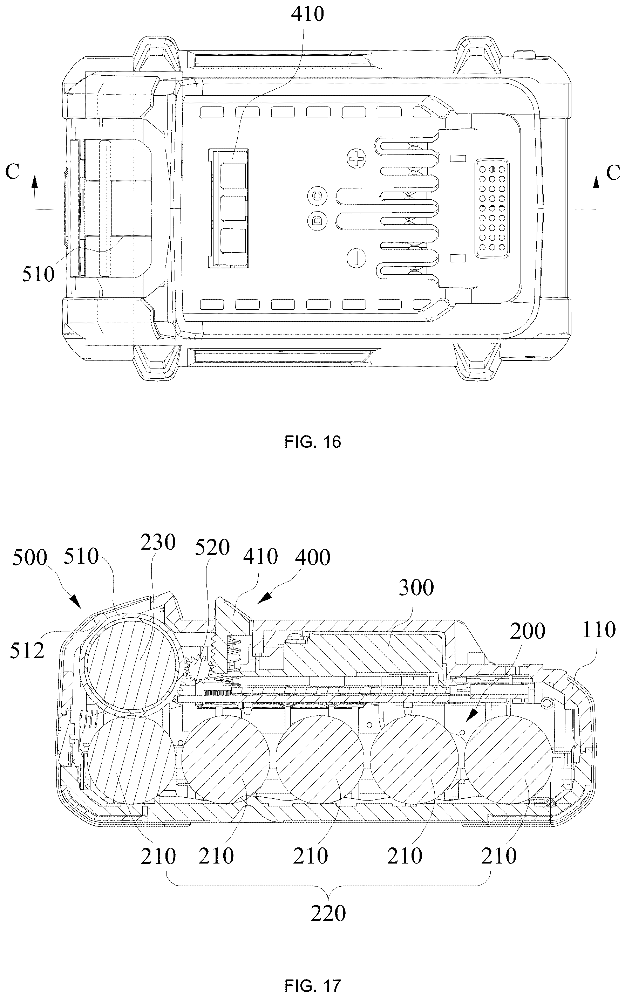

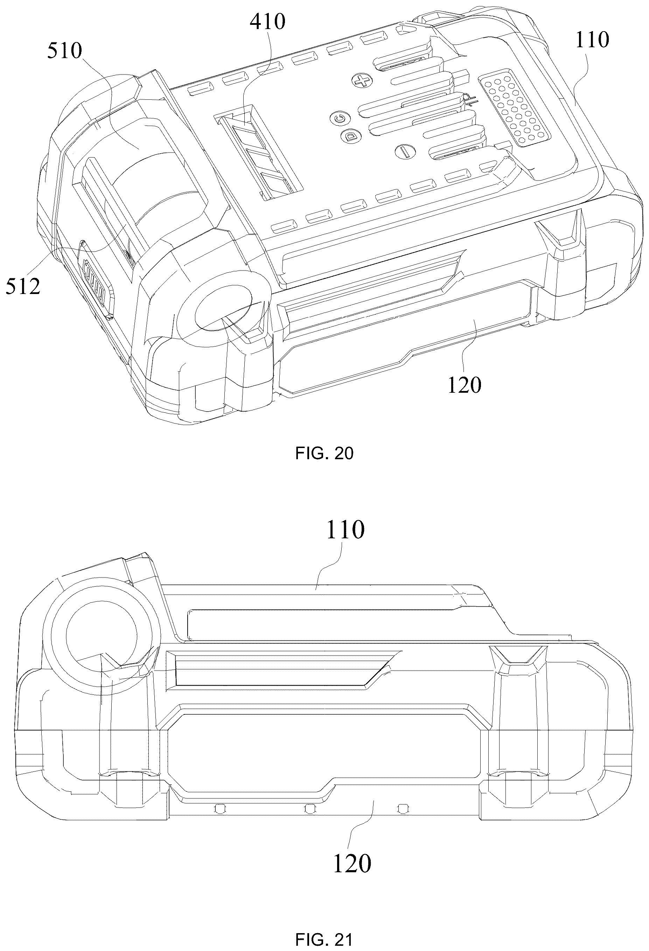

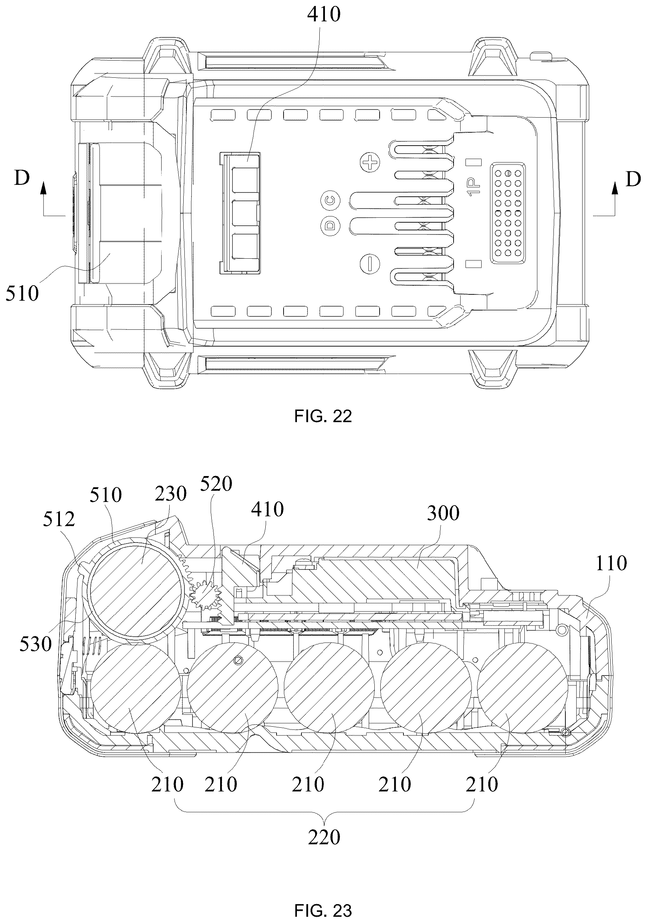

In another example, as shown in FIGS. 13 to 24, the locking member 410 is provided with multiple driven teeth 411 spaced apart along the height direction, the operating member 510 is at least partially disposed in an arc shape around the additional cell 230, the operating member 510 is provided with multiple drive teeth 511 spaced apart around the circumferential direction, the linkage member 520 is a gear and is disposed between the operating member 510 and the locking member 410, and the driving teeth 521 on the linkage member 520 engage with both the driven teeth 411 and the drive teeth 511.

The operating member 510 rotates to drive the linkage member 520 to rotate. Specifically, a toggle portion 512 protrudes from the operating member 510, thereby facilitating the rotation of the operating member 510 by operating the toggle portion 512. For example, the rotation axis of the operating member 510 is the axis of the additional cell 230.

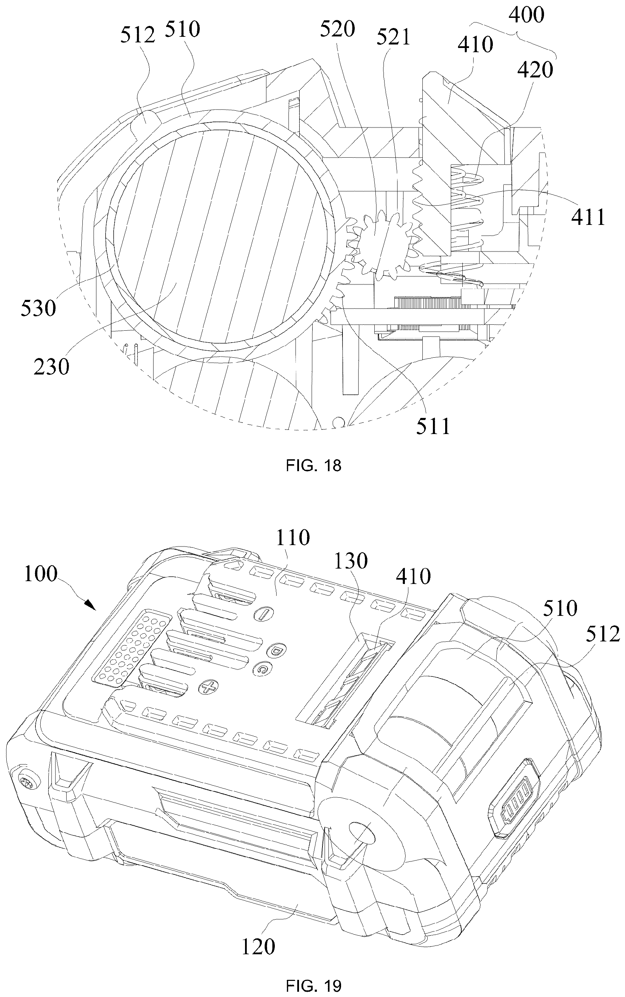

An elastic member is disposed between the operating member 510 and the housing 100 to facilitate the resetting of the operating member 510. As shown in FIGS. 13 to 18, the locking mechanism 400 is in the locked state, the operating member 510 is at a locked position, and the locking member 410 protrudes from the top of the accommodation groove 130. When unlocking is required, the toggle portion 512 is toggled in a direction away from the locking member 410 so that the operating member 510 can rotate about the axis of the operating member 510, thereby driving the linkage member 520 to rotate about the axis of the linkage member 520 to drive the locking member 410 to move. As shown in FIGS. 19 to 24, the locking mechanism 400 is in the unlocked state, the operating member 510 is at the unlocked position, and the locking member 410 retracts into the accommodation groove 130.

The operating member 510 may be directly connected to the additional cell 230 or indirectly connected to the additional cell 230. For example, the unlocking mechanism 500 includes a fixed ring 530 fixedly sleeved on the outer side of the additional cell 230, and the operating member 510 is rotatably sleeved on the outer side of the fixed ring 530.

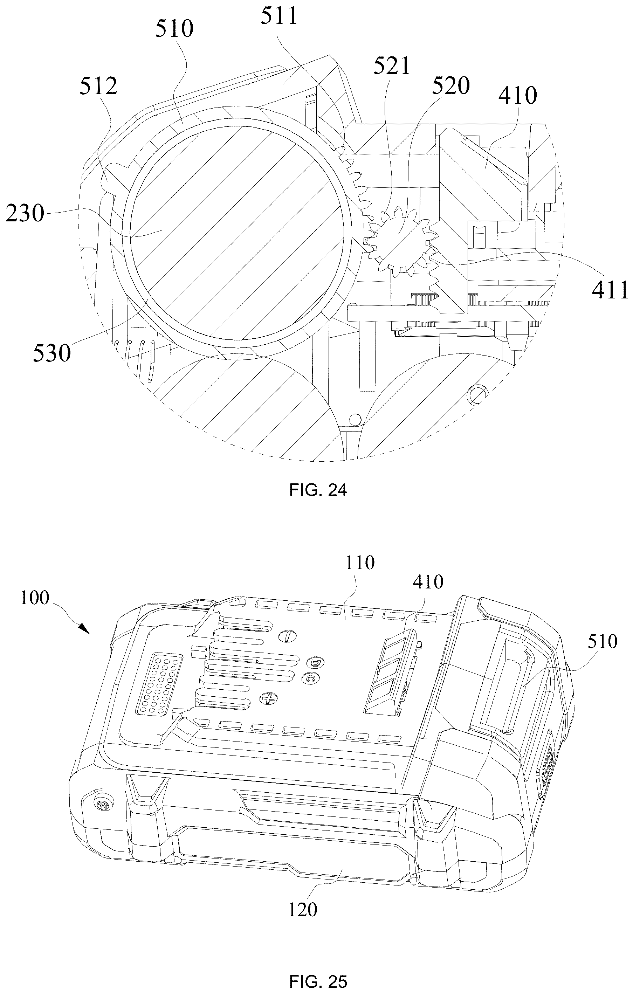

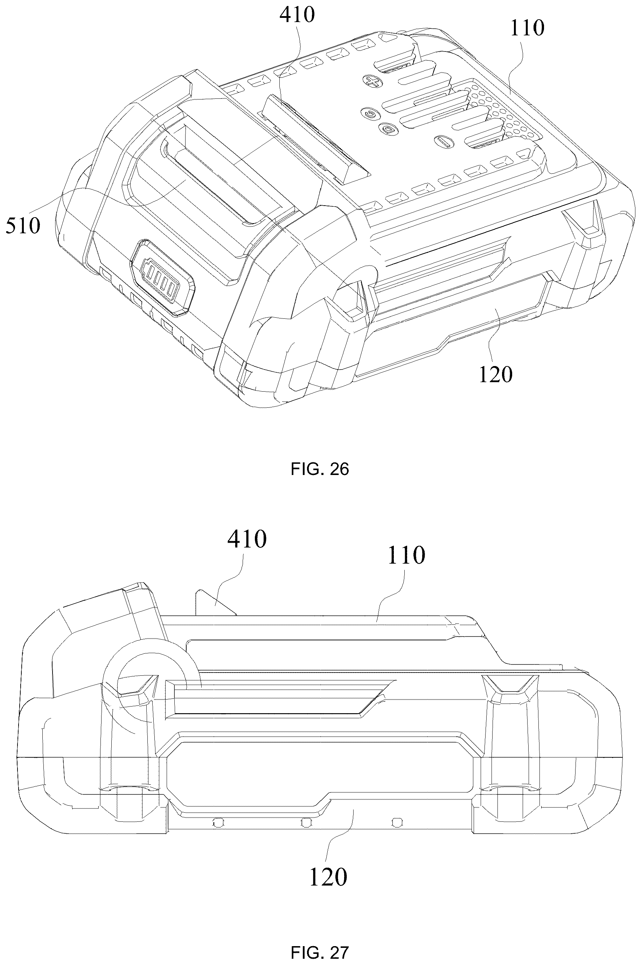

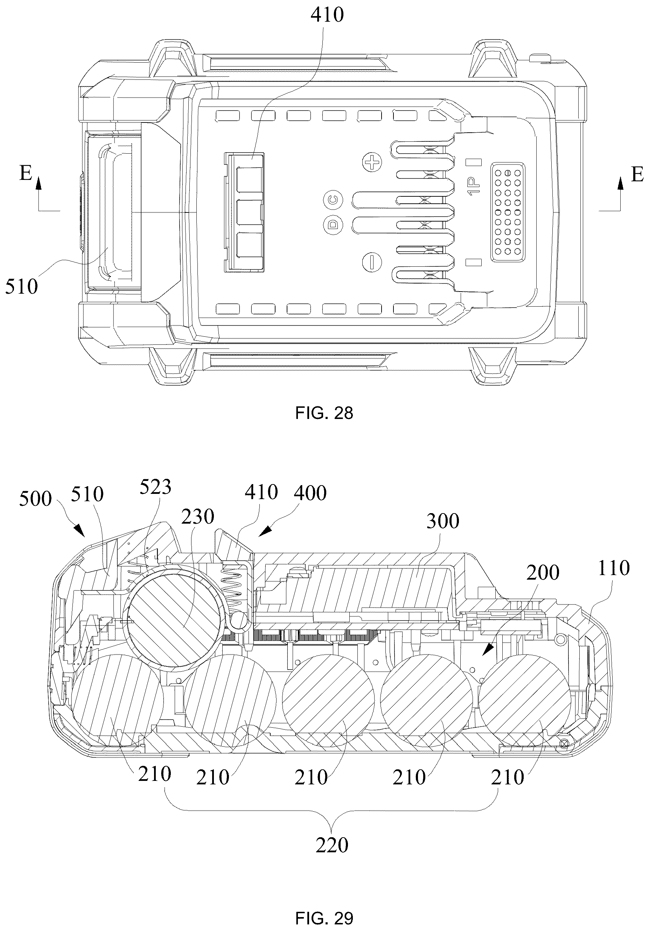

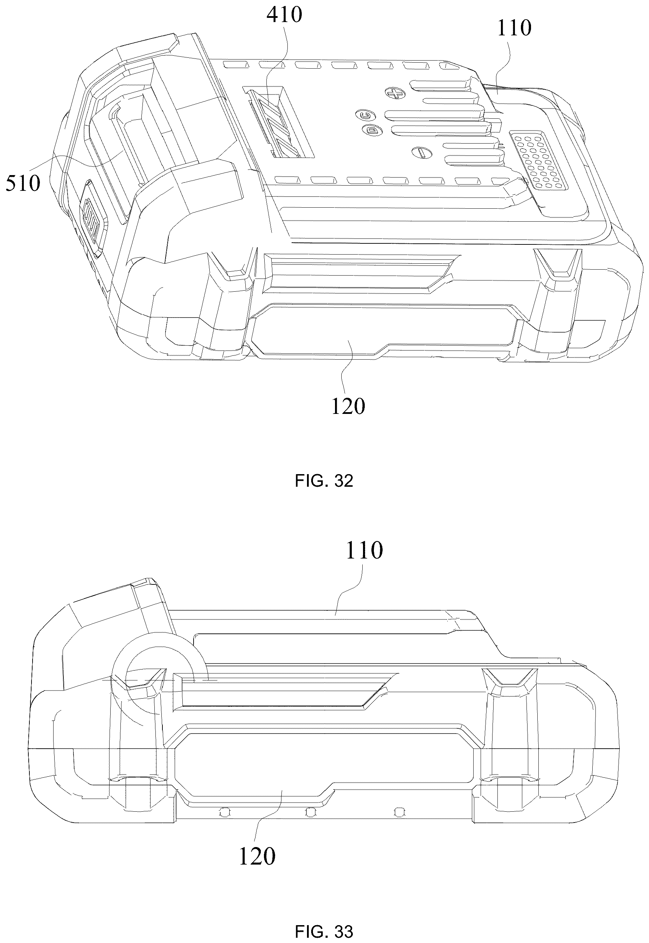

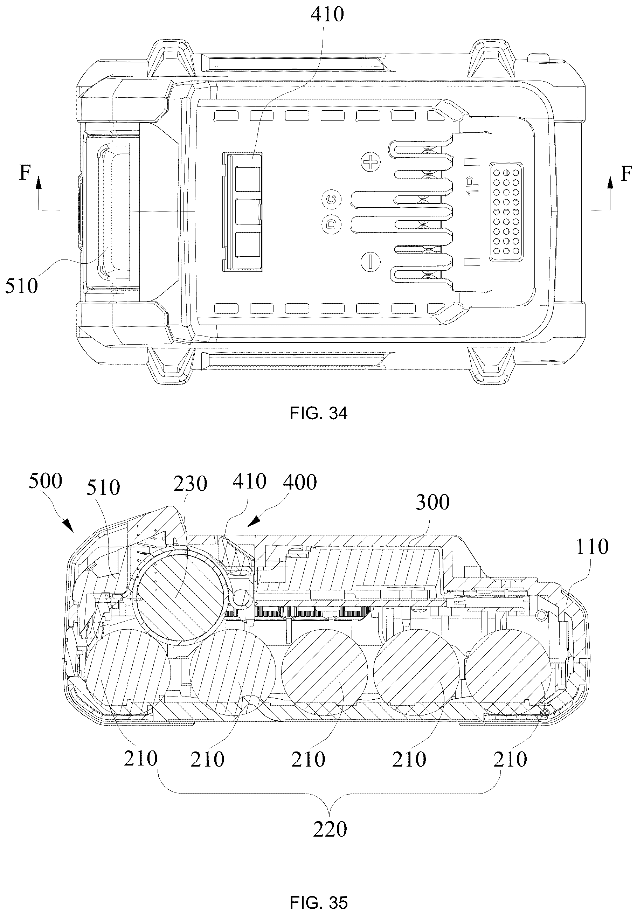

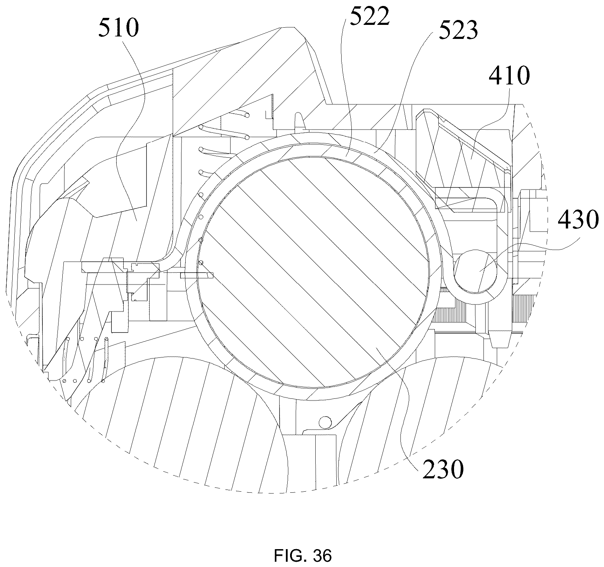

In another example, as shown in FIGS. 25 to 36, the linkage member 520 includes a fixed pin 522 and a flexible belt 523. The fixed pin 522 is fixedly disposed. One end of the flexible belt 523 is fixed to the locking member 410, and the other end of the flexible belt 523 passes around the fixed pin 522 and is fixed to the operating member 510. When the operating member 510 is moved by an external force, the tension is transmitted through the flexible belt 523 to drive the locking member 410 to perform reverse displacement and disengage from the locking groove. The fixed pin 522 provides support, and the flexibility of the flexible belt 523 enables the operating member 510 to drive the locking member 410 to move.

The operating member 510 moves linearly to drive the flexible belt 523 to move. Specifically, the operating member 510 is movable along the height direction of the battery pack to drive the flexible belt 523 to pull the locking member 410 to move.

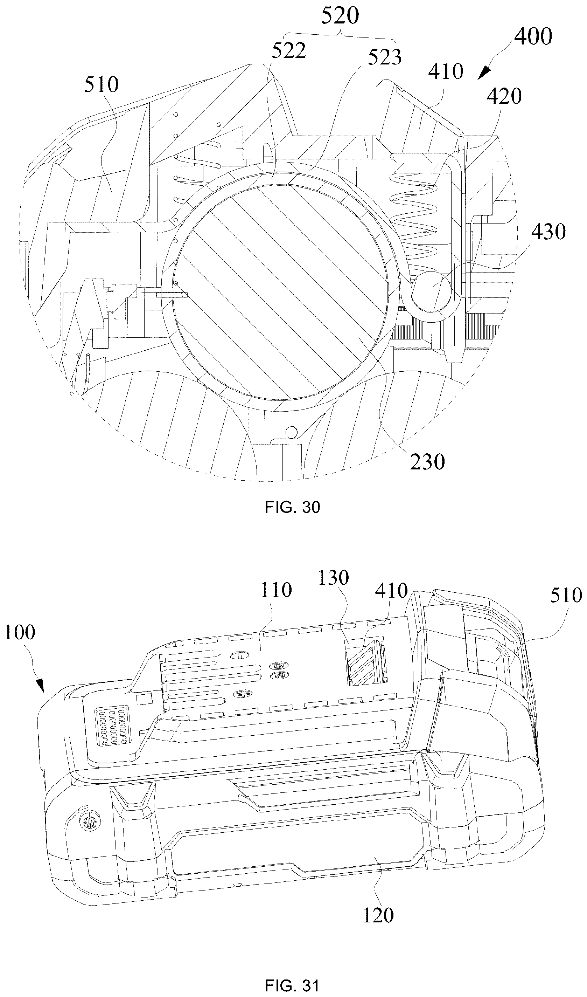

An elastic member is disposed between the operating member 510 and the housing 100 to facilitate the resetting of the operating member 510. As shown in FIGS. 25 to 30, the locking mechanism 400 is in the locked state, the operating member 510 is at a locked position, and the locking member 410 protrudes from the top of the accommodation groove 130. When unlocking is required, the operating member 510 is pressed along the height direction of the battery pack so that the operating member 510 can pull the flexible belt 523 to move. As shown in FIGS. 31 to 36, the locking mechanism 400 is in the unlocked state, the operating member 510 is at the unlocked position, and the locking member 410 retracts into the accommodation groove 130.

The flexible belt 523 is wound around the fixed pin 522, and the fixed pin 522 provides support for the flexible belt 523. The fixed pin 522 may be connected to the housing 100 or may be connected to the additional cell 230. For example, the fixed pin 522 is fixedly sleeved on the outer side of the additional cell 230, and the flexible belt 523 is wound around the upper side of the fixed pin 522.

A guide post 430 is disposed on one side of the locking member 410. The guide post 430 is parallel to the fixed pin 522. The flexible belt 523 is wound around the lower side of the guide post 430 and fixedly connected to the locking member 410. The guide post 430 functions to guide and tension the flexible belt 523.

In the example of the present application, the additional cell 230 is provided in a single row on the upper layer of the cell module 200, and a structure is designed to avoid interference with locking or unlocking assemblies of the battery pack so that the length of the battery pack is not increased or is basically not increased while increasing the capacity or rated voltage of the battery pack.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack for a power tool, comprising:
a housing (100); and
a cell module (200) disposed in the housing (100);
wherein the cell module (200) comprises:
a single-layer arranged cell group (220) comprising a plurality of cells (210) arranged axially side by side in an arrangement plane; and
an additional cell (230) comprising one cell (210), wherein at least a portion of the additional cell (230) is disposed on an upper side of the single-layer arranged cell group (220);
wherein a projection of the additional cell (230) on the arrangement plane falls within a projection range of the single-layer arranged cell group (220) on the arrangement plane.

2. The battery pack for a power tool of claim 1, wherein the plurality of cells (210) in the single-layer arranged cell group (220) are connected in series, and the single-layer arranged cell group (220) is connected in series with the additional cell (230).

3. The battery pack for a power tool of claim 1, wherein the plurality of cells (210) in the single-layer arranged cell group (220) are consistent with the additional cell (230) in terms of battery characteristics or battery models.

4. The battery pack for a power tool of claim 1, wherein the single-layer arranged cell group (220) comprises at least one layer of cells (210) arranged in a layer.

5. The battery pack for a power tool of claim 1, further comprising:
a locking mechanism (400) that physically locks the battery pack to the power tool; and
an unlocking mechanism (500) comprising an operating member (510) operable by a user and a linkage member (520) connected to the operating member (510), wherein the linkage member (520) is capable of driving the locking mechanism (400) to disengage from the power tool when the operating member (510) is operated.

6. The battery pack for a power tool of claim 5, wherein the additional cell (230) is located below the unlocking mechanism; and/or the linkage member (520) is at least partially disposed around a circumference of the additional cell (230).

7. The battery pack for a power tool of claim 5, wherein a projection of the additional cell (230) on a first plane perpendicular to a length direction of the battery pack at least partially overlaps a projection of the locking mechanism (400) on the first plane; and/or a projection of the additional cell (230) on a first plane perpendicular to a length direction of the battery pack at least partially overlaps a projection of the unlocking mechanism (500) on the first plane.

8. The battery pack for a power tool of claim 5, wherein the locking mechanism (400) comprises a movable locking member (410) and a biasing element (420), wherein under an action of the biasing element (420), the locking member (410) is capable of being embedded in a locking groove on the power tool to form an anti-disengagement lock; and
the linkage member (520) is capable of converting a linear or rotary input of the operating member (510) into reverse displacement of the locking member (410), forcing the locking member (410) to disengage from the locking groove.

9. The battery pack for a power tool of claim 5, wherein the linkage member (520) comprises driving teeth (521) that are capable of engaging with driven teeth (411) on a locking member (410) to drive the locking member (410) to perform reverse displacement and disengage from a locking groove.

10. The battery pack for a power tool of claim 9, wherein the linkage member (520) comprises:
a fixed pin (522) fixedly disposed; and
a flexible belt (523), wherein one end of the flexible belt (523) is fixed to the locking member (410), and another end of the flexible belt (523) passes around the fixed pin (522) and is fixed to the operating member (510); and when the operating member (510) is moved by an external force, tension is transmitted through the flexible belt (523) to drive the locking member (410) to perform the reverse displacement and disengage from the locking groove.

11. The battery pack for a power tool of claim 1, wherein the plurality of cells (210) are full-tab cells.

12. The battery pack for a power tool of claim 1, wherein the plurality of cells (210) are connected in series.

13. The battery pack for a power tool of claim 1, wherein a diameter D of a cell (210) of the plurality of cells (210) is less than or equal to 30 mm.

14. The battery pack for a power tool of claim 1, wherein a number N of the plurality of cells (210) is greater than or equal to 5.

15. The battery pack for a power tool of claim 1, wherein a length L of the battery pack in a length direction of the battery pack perpendicular to an axial direction of the plurality of cells (210) is less than or equal to N*D+(N-1)k1 +2*k2, wherein k1 denotes a constant representing a cell gap and k1 is greater than 0; and k2 denotes a constant representing a housing thickness and k2 is greater than 1 mm.
